# EUROPEAN PATENT SPECIFICATION

(11) **EP 2 436 655 B1**
(45) Date of publication and mention of the grant of the patent: **08.06.2016**
(21) Application number: 10780707.5
(22) Date of filing: 01.04.2010
(51) Int. Cl.: C02F 3/30, C02F 3/28, B01F 7/32, B01F 7/16, B01F 13/10, B01F 3/04, C02F 101/30, C02F 101/20

(54) **WASTEWATER TREATMENT INSTALLATION COMPRISING A RECTANGULAR UPSTREAM ANAEROBIC REACTION TANK AND METHOD USING THE SAME**
ANLAGE ZUR ABWASSERBEHANDLUNG MIT EINEM RECHTECKIGEN ANAEROBEN REAKTOR UND VERFAHREN UNTER VERWENDUNG DER ANLAGE
INSTALLATION DE TRAITEMENT DES EAUX USÉES COMPRENANT UN RÉACTEUR RECTANGULAIRE ANAÉROBIE ET UN PROCÉDÉ DE TRAITEMENT UTILISANT LADITE INSTALLATION

(30) Priority: 27.05.2009 KR 20090046361
(43) Date of publication of application: 04.04.2012
(73) Proprietor: Ecodigm Co., Ltd., Daejeon 305-509 (KR); Kwon, Joong Chun, Daejeon 305-301 (KR)
(72) Inventor: KWON, Joong Chun, Daejeon 305-301 (KR); KIM, Yun Hak, Daejeon 305-390 (KR)
(74) Representative: Serjeants LLP
(86) International application number: PCT/KR2010/002009
(87) International publication number: WO 2010/137796

(56) References cited:
- KR-A- 20030 009 677
- KR-A- 20050 081 251
- KR-A- 20090 027 077
- KR-B1- 100 287 412
- US-A- 5 702 604
- US-A1- 2003 141 244
- US-A1- 2004 045 900
- US-A1- 2009 001 016
- US-A1- 2009 032 451

## Description

### BACKGROUND OF THE DISCLOSURE

### 1. Technical Field

The present invention relates to a sewage/wastewater treatment system comprising a rectangular upflow anaerobic/oxygen-free reaction tank and a method of treating sewage/wastewater using the same. More specifically, the present invention relates to a sewage/wastewater treatment system comprising a rectangular upflow anaerobic/oxygen-free reaction tank and an economical method of treating sewage/wastewater using the same, in which organic wastewater containing sparingly soluble and toxic substances, nutrient substances (N or P) and heavy metals can be stably treated using the treatment system together with facultative microorganisms, sludge can be maintained at high concentration to reduce the sludge treatment costs, and existing equipment can be used after modification such that land costs, construction costs and operation costs can be saved.

### 2. Related Art

Generally, wastewater contains nutrient substances such as nitrogen or phosphorus, sparingly soluble and toxic substances, and heavy metals. Methods for treating such wastewater can be broadly divided into biological methods for removing wastewater containing organic matter, and physical/chemical methods for treating wastewater containing sparingly soluble and toxic substances and heavy metals.

Typical examples of the biological wastewater treatment method include an activated sludge method employing a treatment system composed of a first settling tank, an aeration tank and a final settling tank, and a sewage/wastewater treatment method employing an aerobic/anaerobic process. However, the former method requires a means for maintaining the concentration of sludge at a specific level or higher, and the latter method does not use the activated sludge process alone, but adopts a complete mixing mode in which an aerobic reaction tank and an anaerobic/oxygen-free reaction tank which are arranged in a line are operated. Thus, in the latter method, there are problems in that it is difficult to maintain microorganisms in the reaction tanks at high concentrations and in that it is difficult to maintain a complete anaerobic state during denitrification or the induction of phosphorus discharge.

Previously, the present inventor developed a sewage/wastewater treatment system and method for treating organic wastewater containing sparingly and toxic substance, nutrient substances such as nitrogen or phosphorus, and heavy metals, which overcome prior art problems (Korean Patent Registration No. 10-0287412 registered on January 27, 2001, published as KR100287412B).

The above sewage/wastewater treatment system comprises a mixing unit combined with a cylindrical anaerobic/oxygen-free reaction tank. Thus, in the wastewater treatment system, a conventional sewage/wastewater treatment system composed of a first settling tank, a reaction tank and a final settling tank is not applied as it is, the final settling tank is modified to serve as an anaerobic/oxygen-free reaction tank and is operated in combination with the existing reaction tank and final settling tank.

In the previous sewage/wastewater treatment industry, sewage/wastewater treatment systems were divided into two: one employing a cylindrical tank, and the other employing a rectangular tank. For this reason, the above improved sewage/wastewater treatment system and method were applied only to the sewage/wastewater treatment system comprising the cylindrical tank.

Of course, the above improved method can also be applied to the sewage/wastewater treatment system having the rectangular tank. However, for this application, a cylindrical anaerobic/oxygen-free reaction tank should be newly established in place of the first rectangular settling tank such that it is operated in a combination with the existing reaction tank and final settling tank. Thus, excessive equipment investment is required.

Accordingly, there is a need to develop an economical sewage/wastewater treatment method in which the sewage/wastewater treatment system and method (for treating organic wastewater containing sparingly soluble and toxic substances, nutrients such as nitrogen or phosphorus, and heavy metals) proposed by the present inventor can also be applied to the sewage/wastewater treatment system having the rectangular tank in an economical manner.

### DISCLOSURE

### TECHNICAL PROBLEM

Accordingly, the present invention has been made keeping in mind the above problems occurring in the prior art, and an object of the present invention is to provide a sewage/wastewater treatment system for treating organic wastewater containing sparingly soluble or toxic substances, or nutrient substances (nitrogen or phosphorus) and heavy metals, which comprises a rectangular upflow anaerobic/oxygen-free reaction tank including at least one mixing unit and an improved inlet unit and outlet, in which the rectangular upflow anaerobic/oxygen-free reaction tank is combined with a conventional aerobic reaction tank and settling tank, whereby the sewage/wastewater treatment system can purify wastewater at a significantly high efficiency.

In other words, an object of the present invention is to provide a sewage/wastewater treatment system and method in which an existing rectangular upflow sewage/wastewater system is used after modification without establishing a new system so that such that excessive equipment investment can be avoided.

In order to accomplish the above object, the present invention provides a sewage/wastewater treatment system comprising a rectangular upflow anaerobic/oxygen-free reaction tank and a method of treating sewage/wastewater using the same.

### TECHNICAL SOLUTION

### (1) Sewage/wastewater treatment system

The present invention relates to a sewage/wastewater treatment system comprising an anaerobic/oxygen-free reaction tank, an aerobic reaction tank and a settling tank, wherein the anaerobic/oxygen-free reaction tank comprising: (1) a water introduction unit provided in the front of the anaerobic/oxygen-free reaction tank; (2) an inlet unit having a plurality of through-holes formed therein through which water introduced from the water introduction unit passes, the inlet unit communicating with the water introduction unit and being provided at the bottom of the anaerobic/oxygen-free reaction tank; (3) a mixing unit comprising a driving unit, a main shaft disposed in the anaerobic/oxygen-free reaction tank so as to be rotated by the driving means, and a plurality of spaced-apart stirring blades fixed to the main shaft at a right angle thereto; and (4) an outlet unit (weir) provided at the upper portion of the anaerobic/oxygen-free reaction tank to collect the water treated by anaerobic/oxygen-free reaction tank.

In the present invention, in a mixing space defined between the inlet unit and outlet of the anaerobic/oxygen-free reaction tank, a plurality of spaced-apart auxiliary shafts may be disposed spaced from the main shaft such that uniform stirring and water flow are maintained throughout the mixing space.

A sludge collection unit for collecting and discharging settled sludge may be provided at the bottom of the mixing space in the anaerobic/oxygen-free reaction tank.

In the present invention, the inlet unit may be a plate having a plurality of through-holes formed therein, or a plurality of tubes having a plurality of holes formed therethrough, or a plurality of tubes whose ends are distributed uniformly at the bottom of the mixing space.

The sewage/wastewater treatment system according to the preent invention may comprise one anaerobic/oxygen-free reaction tank or a plurality of anaerobic/oxygen-free reaction tanks which are connected directly with each other or disposed with the aerobic reaction tank interposed therebetween.

In the present invention, the water introduction unit may be an introduction pipe or an introduction space. The introduction space may be a kind of retention space formed in the front of the anaerobic/oxygen-free reaction tank.

In the present invention, a sludge collection unit for collecting and discharging settled sludge may be provided at the bottom of the aerobic reaction tank.

Meanwhile, for optimal operation of the anaerobic/oxygen-free reaction tank according to the present invention, a suitable concentration of sludge should be the reaction tank.

Thus, in order to recycle the sludge settled in the settling tank into the anaerobic/oxygen-free reaction tank, the treatment system may preferably comprise a recycle pipe, one end of which communicates with the bottom of the settling tank, and the other end of which communicates with the introduction unit or the anaerobic/oxygen-free reaction tank.

### (2) Sewage/wastewater treatment method

The present invention relates to a method of treating sewage/wastewater using the above-described sewage/wastewater treatment system, the method comprising the steps of: (A) introducing water into the anaerobic/oxygen-free reaction tank through the water introduction unit and the inlet unit (introduction step); (B) stirring the content of the mixing unit at a speed of 3-20 rpm to prevent deflection of the water flowing upward while anaerobically treating the water (anaerobic treatment step); (C) transferring the anaerobically treated, sludge-containing water from the anaerobic/oxygen-free reaction tank through the outlet unit into the aerobic reaction tank (transfer step); (D) supplying a sufficient amount of oxygen to the anaerobically treated, sludge-containing water in the aerobic reaction tank to aerobically treat the water (aerobic treatment step); and (E) transferring the aerobically treated water into the settling tank, separating the transferred water into supernatant water and settled sludge by gravity, and discharging the supernatant water and the sludge separately (separation and discharge step).

In the sewage/waste water treatment method according to the present invention, in order to maintain the concentration of sludge in the anaerobic/oxygen-free reaction tank at a specific level or higher, introduction step (A) preferably comprises recycling a portion of the sludge from the settling tank into the anaerobic/oxygen-free reaction tank through the recycle pipe.

As used herein, the term "inlet unit" refers to a plate or tube, one side of which is connected directly to the water introduction unit, and which is disposed at the bottom of the anaerobic/oxygen-free reaction tank such that the introduced water is spread uniformly throughout the anaerobic/oxygen-free reaction tank.

In the present invention, a specific support frame may be applied to rotatably fix the mixing unit (comprising the driving unit, the main shaft which is rotated by the driving means, etc.).

The water introduction unit is a pipe or space for introducing water, which is provided under the anaerobic/oxygen-free reaction tank. Because water and recycled sludge are introduced into the water introduction unit, a separate mixing unit (not shown; for example, a stirring blade and a driving motor) for mixing the water and the recycled sludge uniformly is preferably provided at any position of the water introduction unit.

The inlet unit is disposed at the bottom of the anaerobic/oxygen-free reaction tank while one side thereof is connected with the water introduction unit. It functions to spread the water (or recycled sludge-containing water), introduced from the water introduction unit, uniformly through the horizontal surface of the anaerobic/oxygen-free reaction tank (mixing unit). Thus, the inlet unit is connected directly with the water introduction unit and may consist of a flat plate having a plurality of holes formed therethrough, or one or a plurality of main tubes having a plurality of holes formed therethrough, or one or a plurality of main tubes having a plurality of holes formed therethrough and a plurality of auxiliary tubes communicating with the main tubes and having a plurality of holes, or a plurality of tubes whose ends are distributed uniformly at the bottom of the mixing unit.

Also, in the mixing unit, the main shaft to which the stirring blades are attached is coupled to the support frame, such that water introduced into the anaerobic/oxygen-free reaction tank is stirred by the rotation of the stirring blades, whereby an anaerobic reaction by microorganisms under anaerobic conditions actively occurs to efficiently purify organic wastewater containing sparingly and toxic substances and nutrient substances.

In this mixing unit, the number of the main shaft and the auxiliary shafts, which are coupled to the support flame, are determined according to the size of the anaerobic/oxygen-free reaction tank, uniform stirring can occur throughout the anaerobic/oxygen-free reaction tank.

Also, the outlet unit preferably comprises a weir and may, if necessary, further comprise a separate transfer tube. The weir functions to collect the water, which was treated in the anaerobic/oxygen-free reaction tank and flows upward, and it may be provided on the inner all of the anaerobic/oxygen-free reaction tank or be disposed so as to connect the opposite walls of the reaction tanks to each other, such that it can collect the treated water and a portion of the sludge.

Meanwhile, the sewage/wastewater treatment of the present invention may further comprise a recycle pipe for transferring sludge from the settling tank into the anaerobic/oxygen-free reaction tank. One end of the recycle pipe may be connected to the bottom of the settling tank, and the other end of the recycle pipe may be connected to the water introduction unit or to a recycle unit provided in the anaerobic/oxygen-free reaction tank.

The recycle pipe serves to recycle sludge suitable of the living of microorganisms to the anaerobic/oxygen-free reaction tank.

The recycle unit serves to spread the recycled sludge uniformly into the anaerobic/oxygen-free reaction tank and may have a structure in which a plurality of tubes are connected to form a lattice and a plurality of through-holes are formed at the upper portion of the tubes. The recycle unit has a structure equal or similar to the above-described inlet unit and may be provided in the anaerobic/oxygen-free reaction tank or may be the inlet unit itself.

If the recycle unit is provided in the anaerobic/oxygen-free reaction tank, the recycle unit is connected directly to the recycle unit, and if it is not provided in the anaerobic/oxygen-free reaction tank, the recycle pipe is connected to the water introduction unit such that the recycled sludge is mixed with water in the water introduction unit and supplied to the anaerobic/oxygen-free reaction tank.

### ADVANTAGEOUS EFFECTS

When the sewage/wastewater treatment system comprising the rectangular upflow anaerobic/oxygen-free reaction tank according to the present invention is used, organic wastewater containing sparingly and toxic substances, or nutrient substances (such as nitrogen or phosphorus) and heavy metals, can be biologically treated. In addition, a high concentration of sludge can be maintained in the reaction tanks, so that the volume of the reaction tanks can be reduced compared maintained in the reaction tanks, so that the volume of the reaction tanks can be reduced compared to that of other biological reaction tanks, and thus the reaction tanks of the present invention can economically treat wastewater.

Particularly, the rectangular upflow anaerobic/oxygen-free reaction tank of the present invention can maintain sludge at high concentration, and thus, when it is applied to a sewage treatment plant, a concentration tank can be omitted from the sewage treatment plant. Additionally, the present invention can be achieved using existing rectangular sewage/wastewater treatment systems, and land costs, construction costs and operation costs can be saved.

### BRIEF DESCRIPTION OF THE DRAWINGS

FIG. 1 is a top view of a sewage/wastewater treatment system according to one embodiment of the present invention.
FIG. 2 is a top view showing various embodiments of an inlet unit according to the present invention.
FIG. 3 is a top view showing various embodiments of an outlet unit according to the present invention.
FIG. 4 is a top view showing an embodiment in which a plurality of anaerobic/oxygen-free reaction tanks are provided.

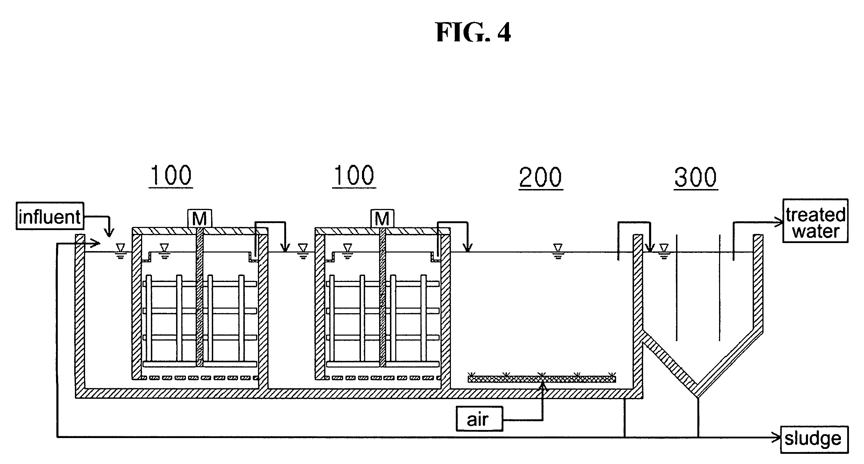

FIG. 4 is a top view showing another embodiment in which a plurality of anaerobic/oxygen-free reaction tanks are provided.

### BEST MODE

Hereinafter, the present invention will be described in further detail with reference to the accompanying drawings. However, these drawings and the description thereof are intended to illustrate rather than limit the technical idea and scope of the present invention. It will be obvious to those skilled in the art that various modifications are possible within the scope of the invention as defined by the appended claims. Meanwhile, the drawings show that an anaerobic/oxygen-free reaction tank, an aerobic reaction tank and a settling tank are disposed adjacent to each other, but it will be obvious that the position, specification and configuration of these tanks may be modified in various manners within the scope of the appended claims.

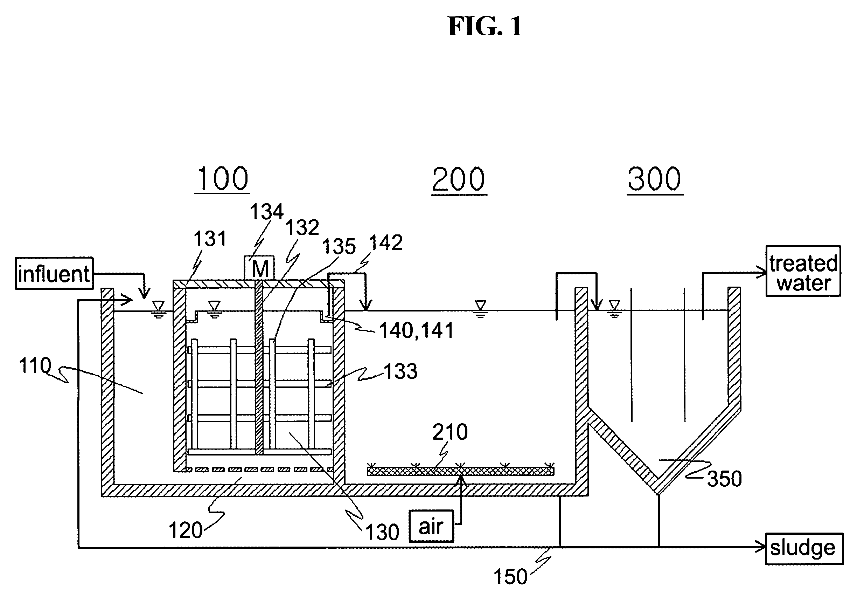

FIG. 1 shows a sewage/wastewater treatment system comprising a rectangular upflow anaerobic/oxygen-free reaction tank according to the present invention. In the figure, a water introduction unit 110 consists of a space in the front of an anaerobic/oxygen-free reaction tank 100, but may, if necessary, consist of a pipe connected directly to the tank 100.

As shown therein, the sewage/wastewater treatment system comprises an anaerobic/oxygen-free reaction tank 100, an aerobic reaction tank 200 and a settling tank 300. The anaerobic/oxygen-free reaction tank 100 comprises: a water introduction unit 110 for introducing wastewater into the anaerobic/oxygen-free reaction tank; an inlet unit 120 directed directly to the water input unit 110 and serving to disperse the introduced water uniformly in the anaerobic/oxygen-free tank 100; a mixing unit 130 for stirring the introduced water and sludge; an outlet unit 140 for transferring the treated water to the aerobic reaction tank.

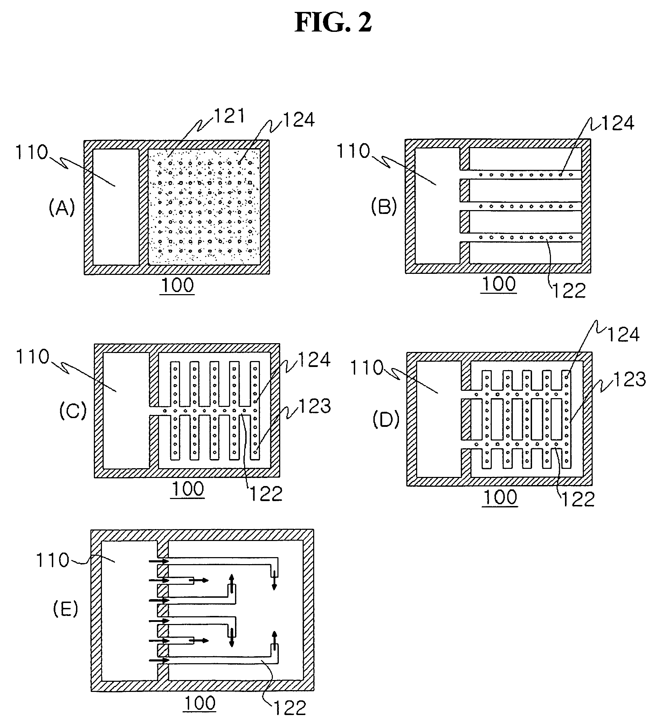

The inlet unit 120 may have various structures allowing the introduced water to be dispersed uniformly throughout the horizontal surface of the anaerobic/oxygen-free reaction tank. For example, as shown in FIG. 2, the inlet unit 124 may consist of a flat plate having a plurality of holes 124 formed therethrough (FIG. 2A), or one or a plurality of main tubes 122 having a plurality of holes 124 formed therethrough (FIG. 2B), or one or a plurality of main tubes 122 having a plurality of holes 124 formed therethrough and a plurality of auxiliary tubes 123 communicating with the main tubes 122 and having a plurality of holes 124 (FIGS. 2C and D), or a plurality of tubes whose ends are distributed uniformly at the bottom of the mixing unit (FIG. 2E).

Also, the mixing unit 130 comprises a support frame 131, a main shaft rotatably coupled to the support frame 131, and 3-6 stirring blades connected to the main shaft. If necessary, a plurality of auxiliary shafts 135 may be disposed such that they are spaced apart from the main shaft 132.

The stirring blades 133 serve to stir large amounts of anaerobic microorganisms present in the introduced water and the sludge and are coupled to the main shaft 132 such that they are spaced apart from each other at a constant interval of about 0.5-1 m, whereby the upper and lower layers in the anaerobic/oxygen-free reaction tanks are uniformly stirred to increase the area of contact between the introduced water and the anaerobic microorganisms, thereby promoting the anaerobic reaction.

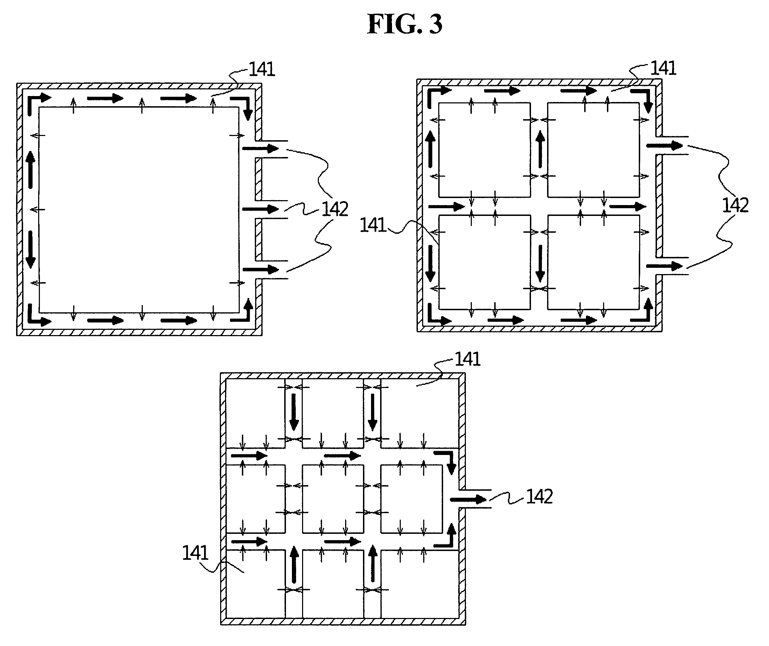

Also, the outlet unit 140 may comprise a weir 141 for collecting the treated water, and a transfer pipe 142 for transferring the treated water into the aerobic reaction tank 200. As shown in FIG, 1, this outlet unit may be provided on the inner wall of the anaerobic/oxygen-free reaction tank 100; however, it may also be provided above the mixing space of the anaerobic/oxygen-free reaction tank 100 such that it have various structures. FIG. 3 shows various embodiments of the outlet unit according to the present invention. The configuration of the weir 141 and the number and position of the transfer pipes 142 may be suitably determined by a person skilled in the art.

The aerobic reaction tank 200 preferably comprises an aeration tube 210 at the bottom in order to supply a sufficient amount of oxygen such that facultative microorganisms can exhibit sufficient activity. This aerobic reaction tank 200 may be made of any material and structure which are conventionally used in the art.

Also, the settling tank 300 serves to remove the sludge efficiently decomposed by facultative microorganisms in the treated water. It is preferably a gravity-type settling tank which can remove the sludge slowly by gravity to purify wastewater and obtain pure water, and may also be a settling tank having a scum-preventing plate therein. The sludge settled in the settling tank is collected and discharged by a sludge collection unit 350.

Meanwhile, according to the present invention, a unit for recycling the sludge settled in the settling tank may additionally be provided. In other words, a portion of the sludge collected by the sludge collection unit 350 in the settling tank 300 is recycled into the reaction tank 100 through a recycle pipe 150. The recycled sludge may also be introduced into the water introduction unit 110 or introduced directly into the anaerobic/oxygen-free reaction tank 100, such that it is mixed with the introduced water.

According to the above-described method, the sludge containing microorganisms is recycled to promote the reaction in the anaerobic/oxygen-free reaction tank 100. If sludge is excessively introduced or produced in the anaerobic/oxygen-free reaction tank 100, the excess portion of the sludge will be discharged to the outside using the sludge collection unit 350.

Meanwhile, the sewage/wastewater treatment system according to the present invention may be provided with one anaerobic reaction tank as shown in FIG. 1, but may also comprise a plurality of reaction tanks which are connected directly with each other or are continuously arranged with the aerobic reaction tank interposed therebetween.

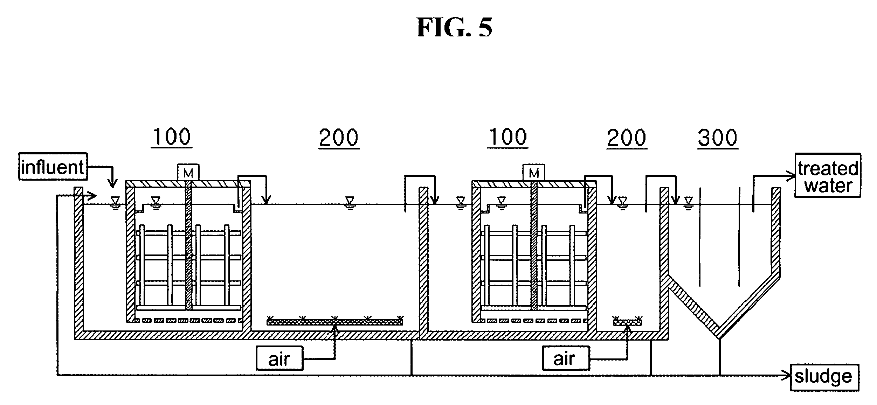

FIG. 4 shows an embodiment in which two anaerobic/oxygen-free reaction tanks are connected directly with each other (that is, reaction tank → reaction tank → aerobic tank → settling tank), and FIG. 5 shows an embodiment in which two reaction tank and two aerobic reaction tanks are connected alternately with each other (that is, reaction tank → aerobic reaction tank → reaction tank → aerobic tank → settling tank). Such various configurations may be suitably selected depending on the overall structure and scale of the sewage/wastewater treatment system, the properties of wastewater to be treated, etc.

As described above, the sewage/wastewater treatment system according to the present invention has an advantage in that organic wastewater containing sparingly soluble and toxic substances and nutrients (N or P) is treated using facultative microorganisms and the rectangular upflow anaerobic/oxygen-free reaction tank, whereby the treatment system of the present invention can more efficiently treat wastewater compared to the conventional sewage/wastewater system or cylindrical upflow anaerobic/oxygen-free reaction tank.

Hereinafter, each step of the method for treating sewage/wastewater using the sewage/wastewater treatment system comprising the rectangular upflow anserobic/oxygen-free reaction will be described in further detail together with the operation and effect of the treatment system.

### Introduction step: Introduction of water into anaerobic/oxygen-free reaction tank

Wastewater containing sparingly soluble and toxic water and nutrient substances (N, P) is directed into the anaerobic/oxygen-free reaction tank through the water introduction unit provided under the reaction tank and is then introduced into the reaction tank through the inlet unit connected with the water introduction unit.

### Anaerobic treatment step: Fermentation in anaerobic/oxygen-free reaction tank

In order to more efficiently purify the water (containing sparingly soluble and toxic water and nutrient substances (N, P)) introduced into the anaerobic/oxygen-free reaction tank as described above, activated sludge is introduced into the reaction tank. Then, the content of the mixing section in the reaction tank is continuously stirred at a speed of 3-20 rpm to induce a sufficient anaerobic reaction.

This stirring can prevent the short circuiting of the introduced sludge/organic wastewater mixture from occurring due to an increase in the sludge concentration when the mixture in the anaerobic/oxygen-free reaction tank flows upward while it reacts. If the stirring speed in the mixing unit is less than 3 rpm, the short circuiting will appear so that no sufficient reaction will occur, and if it is more than 20 rpm, completing mixing will occur such that the advantage of the plug flow reactor cannot be used.

### Transfer step: Transfer into aerobic reaction tank

The sludge-contained treated water that flows upward is transferred from the anaerobic/oxygen-free reaction tank into the aerobic tank through the outlet unit (weir) located at the upper portion of the anaerobic/oxygen-free reaction tank.

### Aerobic treatment step: Aeration in aerobic reaction tank

To the sludge-containing treated water transferred from the anaerobic/oxygen-free reaction tank, a sufficient amount of oxygen is supplied through the aeration tube. Then, the activity of aerobic or facultative microorganisms in the sludge increases so that various organic substances in the wastewater are decomposed by oxidation into inorganic substances such as H₂O or CO₂, and ammonia nitrogen and organic nitrogen are converted into nitrate nitrogen, and the microorganisms in the sludge take an excess of phosphorus.

In this step, in order to more efficiently purify the organic wastewater containing sparingly soluble and toxic water and nutrient substances (N, P), a portion of the treated water which had been subjected to the aeration process in the aerobic reaction tank may be recycled into the anaerobic/oxygen-free reaction tank.

### Separation and discharge step: Separation, discharge and sludge recycle

The treated water which had been subjected to the aeration process is transferred into the settling tank from which pure water is separated and discharged, and the sludge settled by gravity is collected in the sludge collection unit at the bottom of the final settling tank and is discharged.

In the sewage/wastewater treatment method according to the present invention, microorganisms, including Nitrosomonas, Nitrobacter, Denitrifier, Sulfate reducing bacteria, Pseudomonas, Achromobacter, Aerhorbacter, Micrococcus, Bacillus, Proteus, Flavobacterium, Acinetobacter, Corynebacterium or Mycobacterium, as well as commercially available various facultative microorganisms, may be used in the anaerobic/oxygen-free reaction tank or the aerobic reaction tank.

As described above, the sewage/wastewater treatment system of the present invention comprising the rectangular anaerobic/oxygen-free reaction tank can economically biologically treat organic wastewater containing sparingly soluble and toxic substances, or nutrient substances, such as nitrogen or phosphorus, and heavy metals, using the existing rectangular sewage/wastewater treatment system.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A sewage/wastewater treatment system comprising a rectangular upflow anaerobic reaction tank (100), an aerobic reaction tank (200) and a settling tank (300), wherein the anaerobic reaction tank (100) comprises:
a water introduction unit (110) provided upstream of the anaerobic reaction tank (100);
an inlet unit (120) having a plurality of through-holes (124) formed therein through which water introduced from the water introduction unit (110) passes, the inlet unit (120) communicating directly with the water introduction unit (110) and being provided at the bottom of the anaerobic reaction tank (100) such that introduced water is spread uniformly throughout a horizontal surface of the anaerobic reaction tank (100);
a mixing unit (130) comprising a driving unit, a main shaft (132) disposed in the anaerobic reaction tank (100) so as to be rotated by the driving means, and a plurality of spaced-apart stirring blades fixed (133) to the main shaft (132) at a right angle thereto; and
an outlet unit (weir) (140) provided at the upper portion of the anaerobic reaction tank (100) to collect the water treated by anaerobic reaction tank (100).

2. The sewage/wastewater treatment system of claim 1, wherein the sewage/wastewater treatment system comprises a plurality of the anaerobic reaction chambers which are connected directly to each other or disposed with the aerobic reaction tank (100) interposed thereinbetween.

3. The sewage/wastewater treatment system of claim 1 or 2, wherein the water introduction unit (110) is an introduction pipe or an introduction space.

4. The sewage/wastewater treatment system of claim 1 or 2, further comprising a recycle pipe for recycling sludge from the settling tank (300) into the anaerobic reaction tank (100), in which one end of the recycle pipe is connected to the bottom of the settling tank (300), and the other end of the recycle pipe is connected to the inlet unit (120) or the anaerobic reaction tank (100).

5. A method of treating sewage/wastewater using the sewage/wastewater treatment system of any of claims 1 to 3, the method comprising the steps of:
(A) introducing water into the anaerobic reaction tank (100) through the water introduction unit (110) and the inlet unit (120) (introduction step);
(B) stirring the content of the mixing unit (130) at a speed of 3-20 rpm to prevent deflection of the water flowing upward while anaerobically treating the water (anaerobic treatment step);
(C) transferring the anaerobically treated, sludge-containing water from the anaerobic reaction tank (100) through the outlet unit (140) into the aerobic reaction tank (200) (transfer step);
(D) supplying a sufficient amount of oxygen to the anaerobically treated, sludge-containing water in the aerobic reaction tank (200) to aerobically treat the water (aerobic treatment step); and
(E) transferring the aerobically treated water into the settling tank (300), separating the transferred water into supernatant water and settled sludge by gravity, and discharging the supernatant water and the sludge separately (separation and discharge step).

6. A method of treating sewage/wastewater using the sewage/wastewater treatment system of claim 4, the method comprising the steps of:
(A) introducing water into the anaerobic reaction tank (100) through the water introduction unit (110) and the inlet unit (120), while recycling a portion of the sludge from the settling tank (300) into the anaerobic reaction tank (100) through the recycle pipe (introduction step);
(B) stirring the content of the mixing unit (130) at a speed of 3-20 rpm to prevent deflection of the water flowing upward while anaerobically treating the water (anaerobic treatment step);
(C) transferring the anaerobically treated, sludge-containing water from the anaerobic reaction tank (100) through the outlet unit into the aerobic reaction tank (200) (transfer step);
(D) supplying a sufficient amount of oxygen to the anaerobically treated, sludge-containing water in the aerobic reaction tank (200) to aerobically treat the water (aerobic treatment step); and
(E) transferring the aerobically treated water into the settling tank (300), separating the transferred water into supernatant water and settled sludge by gravity, and discharging the supernatant water and the sludge separately (separation and discharge step).

## Patentansprüche

1. Eine Abwasserbehandlungsanlage, bestehend aus einem rechteckigen anaeroben Aufstromreaktionsbehälter (100), einem aeroben Reaktionsbehälter (200) sowie einem Klärbecken (300), mit dem anaeroben Reaktionsbehälter (100) bestehend aus:
einer dem anaeroben Reaktionsbehälter (100) vorgeschalteten Wassereinleitungsvorrichtung (110);
einer Einlassvorrichtung (120) mit einer Vielzahl von Durchgangsbohrungen (124), durch welche Wasser aus der Wassereinleitungsvorrichtung (110) läuft, wobei die Einlassvorrichtung (120) direkt mit der Wassereinleitungsvorrichtung (110) kommuniziert und dafür sorgt, dass sich am Boden des anaeroben Reakzionsbehälters (100) das eingeleitete Wasser gleichmäßig auf einer horizontalen Fläche des anaeroben Reaktionsbehälters (100) verteilt;
einer Mischvorrichtung (130) mit einer Antriebseinheit und einer Hauptwelle (132), die im anaeroben Reaktionsbehälter (100) angeordnet ist und durch die Antriebseinheit gedreht wird, mit einer Vielzahl von nebeneinander angeordneten und rechtwinklig zur Hauptwelle (132) angebrachten Mischblättern (133); und
einer Auslassvorrichtung (Wehr) (140) am Oberteil des anaeroben Reaktionsbehälters (100), um das durch den anaeroben Reaktionsbehälter (100) aufbereitete Wasser zu sammeln.

2. Eine Abwasserbehandlungsanlage nach Anspruch 1, wcbei die Abwasserbehandlungsanlage eine Vielzahl der anaeroben Reaktionskammern umfasst, welche direkt miteinander verbunden sind oder im dazwischenliegenden aeroben Reaktionsbehälter (100) angebracht sind.

3. Die Abwasserbehandlungsanlage nach Anspruch 1 oder Anspruch 2, wobei die Wassereinleitungsvorrichtung (110) ein Einlassrohr oder eine Einlasskammer ist.

4. Die Abwasserbehandlungsanlage nach Anspruch 1 oder 2, ferner bestehend aus einer Recyclingleitung für das Recycling von Schlamm aus dem Klärbecken (300) in den anaeroben Reaktionsbehälter (100), wobei ein Ende der Recyclingleitung mit dem Boden des Klärbeckens (300) verbunden ist und das andere Ende mit der Einlassvorrichtung (120) oder dem anaeroben Reaktionsbehälter (100).

5. Eine Methode zur Aufbereitung von Wasser mittels der Abwasserbehandlungsanlage nach jedem der Ansprüche 1 bis 3; die Methode umfasst die folgenden Schritte:
(A) Einleitung von Wasser in den anaeroben Reaktionsbehälter (100) durch die Wassereinleitungsvorrichtung (110) und die Einlassvorrichtung (120) (Einleitungsschritt);
(B) Vermischen des Inhalts der Mischvorrichtung (130) bei einer Geschwindigkeit von 3-20 U/min., um eine Ablenkung des Wassers nach oben während der anaeroben Aufbereitung des Wassers zu vermeiden (anaerober Aufbereitungsschritt);
(C) Weiterleitung des anaerob aufbereiteten schlammhaltigen Wassers aus dem anaeroben Reaktionsbehälter (100) durch die Auslassvorrichtung (140) in den aeroben Reaktionsbehälter (200) (Weiterleitungsschritt);
(D) Zufuhr einer ausreichenden Menge an Sauerstoff zum anaerob aufbereiteten schlammhaltigen Wasser im aeroben Reaktionstank (200) zur aeroben Aufbereitung des Wassers (aerober Aufbereitungsschritt); und
(E) Weiterleitung des aerob aufbereiteten Wassers in das Klärbecken (300), wobei durch die Schwerkraft eine Abscheidung des weitergeleiteten Wassers in Überstandswasser und abgesetzten Schlamm erfolgt und das Überstandswasser und der Schlamm getrennt abgelassen werden (Trenn- und Ablassschritt).

6. Eine Methode zur Aufbereitung von Wasser mittels der Abwasserbehandlungsanlage nach dem Anspruch 4; die Methode umfasst die folgenden Schritte:
(A) Einleitung von Wasser in den anaeroben Reaktionsbehälter (100) durch die Wassereinleitungsvorrichtung (110) und die Einlassvorrichtung (120), wobei ein Teil des Schlamms aus dem Klärbecken (300) über die Recyclingleitung in den anaeroben Reaktionsbehälter (100) recycelt wird (Einleitungsschritt);
(B) Vermischen des Inhalts der Mischvorrichtung (130) bei einer Geschwindigkeit von 3-20 U/min., um eine Ablenkung des Wassers nach oben während der anaeroben Aufbereitung des Wassers zu vermeiden (anaerober Aufbereitungsschritt);
(C) Weiterleitung des anaerob aufbereiteten schlammhaltigen Wassers aus dem anaeroben Reaktionsbehälter (100) durch die Auslassvorrichtung (140) in den aeroben Reaktionsbehälter (200) (Weiterleitungsschritt);
(D) Zufuhr einer ausreichenden Menge an Sauerstoff zum anaerob aufbereiteten schlammhaltigen Wasser im aeroben Reaktionstank (200) zur aeroben Aufbereitung des Wassers (aerober Aufbereitungsschritt); und
(E) Weiterleitung des aerob aufbereiteten Wassers in das Klärbecken (300), wobei durch die Schwerkraft eine Abscheidung des weitergeleiteten Wassers in Überstandswasser und abgesetzten Schlamm erfolgt und das Überstandswasser und der Schlamm getrennt abgelassen werden (Trenn- und Ablassschritt).

## Revendications

1. Système de traitement des eaux usées/d'égout comprenant un réservoir de réaction anaérobie rectangulaire à flux ascendant (100), un réservoir de réaction aérobie (200) et un bassin de décantation (300), dans lequel le réservoir de réaction anaérobie (100) comprend :
une unité d'introduction d'eau (110) prévue en amont du réservoir de réaction anaérobie (100) ;
une unité d'entrée (120) ayant une pluralité de trous débouchants (124) formés à l'intérieur de cette dernière, à travers lesquels l'eau introduite par l'unité d'introduction d'eau (110) passe, l'unité d'entrée (120) communiquant directement avec l'unité d'introduction d'eau (110) et étant prévue au fond du réservoir de réaction anaérobie (100), de sorte que l'eau introduite est pulvérisée uniformément sur toute une surface horizontale du réservoir de réaction anaérobie (100) ;
une unité de mélange (130) comprenant une unité d'entraînement, un arbre principal (132) disposé dans le réservoir de réaction anaérobie (100) afin d'être entraîné en rotation par les moyens d'entraînement, et une pluralité de pales d'agitation (133) espacées, fixées à l'arbre principal (132) en angle droit ; et
une unité de sortie (déversoir) (140) prévue au niveau d'une partie supérieure du réservoir de réaction anaérobie (100) pour collecter l'eau traitée par le réservoir de réfaction anaérobie (100).

2. Système de traitement des eaux usées/d'égout selon la revendication 1, dans lequel le système de traitement des eaux usées/d'égout comprend une pluralité de chambres de réaction anaérobie qui sont raccordées directement entre elles ou disposées avec le réservoir de réaction aérobie (100) intercalé entre elles.

3. Système de traitement des eaux usées/d'égout selon la revendication 1, dans lequel l'unité d'introduction d'eau (110) est un tube d'introduction ou un espace d'introduction.

4. Système de traitement des eaux usées/d'égout selon la revendication 1 ou 2, comprenant en outre un tuyau de recyclage pour recycler la boue provenant du bassin de décantation (300) dans le réservoir de réaction anaérobie (100), dans lequel une extrémité du tuyau de recyclage est raccordée au fond du bassin de décantation (300), et l'autre extrémité du tuyau de recyclage est raccordée à l'unité d'entrée (120) ou au réservoir de réaction anaérobie (100).

5. Procédé pour traiter des eaux usées/d'égout en utilisant le système de traitement des eaux usées/d'égout selon l'une quelconque des revendications 1 à 3, comprenant les étapes consistant à :
(A) introduire de l'eau dans le réservoir de réaction anaérobie (100) par l'unité d'introduction d'eau (110) et l'unité d'entrée (120) (étape d'introduction) ;
(B) remuer le contenu de l'unité de mélange (130) à une vitesse de 3-20 tours par minute pour empêcher la déviation de l'eau s'écoulant vers le haut tout en traitant l'eau par voie anaérobie (étape de traitement anaérobie) ;
(C) transférer l'eau contenant la boue, traitée par voie anaérobie, du réservoir de réaction anaérobie (100) par l'unité de sortie (140) dans le réservoir de réaction aérobie (200) (étape de transfert) ;
(D) fournir une quantité suffisante d'oxygène à l'eau contenant la boue, traitée par voie anaérobie, dans le réservoir de réaction aérobie (200) pour traiter l'eau par voie aérobie (étape de traitement aérobie) ; et
(E) transférer l'eau traitée par voie aérobie dans le bassin de décantation (300), séparer l'eau transférée en eau surnageante et boue décantée par gravité, et décharger l'eau surnageante et la boue séparément (étape de séparation et de décharge).

6. Procédé pour traiter les eaux usées/d'égout en utilisant le système de traitement des eaux usées/d'égout selon la revendication 4, le procédé comprenant les étapes consistant à :
(A) introduire de l'eau dans le réservoir de réaction anaérobie (100) par l'unité d'introduction d'eau (110) et l'unité d'entrée (120), tout en recyclant une partie de la boue provenant du bassin de décantation (300) dans un réservoir de réaction anaérobie (100) par le tuyau de recyclage (étape d'introduction) ;
(B) remuer le contenu ce l'unité de mélange (130) à une vitesse de 3-20 tours par minute pour empêcher la déviation de l'eau s'écoulant vers le haut tout en traitant l'eau par voie anaérobie (étape de traitement anaérobie) ;
(C) transférer l'eau contenant la boue, traitée par voie anaérobie, du réservoir de réaction anaérobie (100) par l'unité de sortie dans le réservoir de réaction aérobie (200) (étape de transfert) ;
(D) fournir une quantité suffisante d'oxygène à l'eau contenant la boue, traitée par voie anaérobie dans le réservoir de réaction aérobie (200) pour traiter l'eau par voie aérobie (étape de traitement aérobie) ; et
(E) transférer l'eau traitée par voie aérobie, dans le bassin de décantation (300), séparer l'eau transférée en eau surnageante et boue décantée par gravité, et décharger l'eau surnageante et la boue séparément (étape de séparation et de décharge).
